# FASCICULE DE BREVET EUROPEEN

(11) **EP 1 203 028 B1**
(45) Date de publication et mention de la délivrance du brevet: **12.10.2005**
(21) Numéro de dépôt: 00949347.9
(22) Date de dépôt: 14.07.2000
(51) Int. Cl.: C08B 37/18, A23L 1/052, C08L 5/00

(54) **NOUVELLES FRACTIONS D'INULINE, LEUR PREPARATION ET LEUR UTILISATION**
NEUE INULIN-FRAKTIONEN, VERFAHREN ZU DEREN HERSTELLUNG UND IHRE VERWENDUNG
NOVEL INULIN FRACTIONS, PREPARATION AND USE

(30) Priorité: 14.07.1999 BE 9900486
(43) Date de publication de la demande: 08.05.2002
(73) Titulaire: Faculté Universitaire des Sciences Agronomiques de Gembloux, 5030 Gembloux (BE)
(72) Inventeur: BLECKER, Christophe, B-5032 Les Isnes (BE); RAZAFINDRALAMBO, Hary, B-5030 Gembloux (BE); CHEVALIER, Jean-Pol, B-1400 Nivelles (BE); WATHELET, Bernard, B-5100 Wepion (BE); DEROANNE, Claude, B-5030 Gembloux (BE); PAQUOT, Michel, B-5310 Noville/Mehaigne (BE)
(74) Mandataire: Brants, Johan P.E.
(86) Numéro de dépôt international: PCT/EP2000/006745
(87) Numéro de publication internationale: WO 2001/004161

(56) Documents cités:
- EP-A- 0 867 470
- WO-A-96/03888
- US-A- 5 422 346
- US-A- 5 478 732
- PATENT ABSTRACTS OF JAPAN vol. 16, no. 106 (C-919), 16 mars 1992 (1992-03-16) & JP 03 281601 A (AJINOMOTO CO INC), 12 décembre 1991 (1991-12-12) & CHEMICAL ABSTRACTS, vol. 116, no. 14, 6 avril 1992 (1992-04-06) Columbus, Ohio, US; abstract no. 131531, & DATABASE WPI Week 199205 Derwent Publications Ltd., London, GB; AN 1992-036226

## Description

La présente invention a pour objet de nouvelles fractions d'inuline, des procédés pour obtenir de telles fractions, des compositions et des gels obtenus à partir de ces fractions et l'utilisation de telles fractions dans des compositions alimentaires ou autres.

L'inuline est un oligofructose à chaîne linéaire β(2-1) de résidus D-fructofuranosyl terminé par une molécule de glucose. Elle provient en pratique principalement de la racine de chicorée.

L'inuline native de chicorée, telle qu'elle est extraite de la plante, consiste en un mélange d'inulines ayant des chaînes de longueur variable.

Il existe de nombreux documents relatifs à l'inuline. Les documents EP 0 822 943, EP 0 867 470, EP 0 879 249, EP 0 792 889, EP 0 824 109, WO 96/03888, US 5 478 732, US 5840884, US 5051408 et JP-A 3281601 sont cités à titre d'arrière-plan technologique.

La demande de brevet européen 0 787 745 décrit la préparation d'inuline de différents poids moléculaires par ultrafiltration.

La demande de brevet internationale (PCT) WO 00/11967 décrit la préparation de fractions d'inuline contenant plus de 75 % en poids de polysaccharides ayant un degré de polymérisation inférieur à 14.

La demande de brevet européen 0 867 470 décrit la synergie de l'inuline avec d'autres hydrocolloïdes dont la gellane pour former des gels à applications alimentaires, qui s'avèrent cependant être des gels opaques et blanchâtres. L'inuline utilisée est un produit commercial qui ne subit pas de traitement préalable.

La présente invention a pour objectif de procurer des nouvelles fractions d'inuline, avec des gammes de propriétés plus étroites et des domaines d'application bien spécifiques.

Elle a également pour objet de préparer des gels à applications alimentaires contenant de telles fractions, qui ne présentent pas les inconvénients des gels de l'état de la technique.

L'invention définit, en particulier, en tant que nouveaux produits, des fractions d'inuline présentant un pic endothermique, dont le sommet, tel que mesuré par analyse calorimétrique différentielle, est situé entre 150 et 165°C.

Par « Analyse Calorimétrique Différentielle », également désignée par « ACD », on entend désigner aux fins de la présente invention une analyse faite sur des échantillons d'inuline sous forme de poudre, dans des conditions standardisées, à profil de températures impliquant un palier stable de température de départ inférieur à la température ambiante et une montée en température égale à 5°C min. Cette méthode d'analyse permet d'observer des courbes représentant le flux de chaleur en fonction de la température. Ces courbes présentent des pics endothermiques et des épaulements. La valeur du sommet d'un pic endothermique permet de caractériser l'échantillon d'inuline analysé.

Ces fractions d'inuline, selon l'invention présentent de préférence un pic endothermique, dont le sommet, tel que mesuré par analyse calorimétrique différentielle, est situé entre 158 et 163°C.

L'invention définit également, en tant que nouveaux produits, des fractions d'inuline ayant un degré de polymérisation moyen en masse (Dpw) compris entre 15.0 et 22.0, essentiellement constituées de polysaccharides ayant des degrés de polymérisation compris entre 1 et 40, plus de 85 % en masse des polysaccharides ayant un degré de polymérisation compris entre 11 et 40.

De préférence, plus de 75 % en masse des polysaccharides ont un degré de polymérisation compris entre 11 et 30 .

L'invention définit, par ailleurs, en tant que nouveaux produits, des fractions d'inuline ayant un degré de polymérisation moyen en masse (Dpw) entre 18.0 et 21.0, essentiellement constituées de polysaccharides ayant des degrés de polymérisation compris entre 1 et 40, tandis que plus de 90% en masse des polysaccharides ont un degré de polymérisation compris entre 11 et 40.

De préférence, plus de 80 % en masse des polysaccharides ont un degré de polymérisation compris entre 11 et 30.

De préférence, ces fractions d'inuline selon l'invention sont telles que plus de 75 % en masse des polysaccharides ont un degré de polymérisation inférieur à 26.

L'invention définit, enfin, en tant que nouveaux produits, des fractions d'inuline ayant un degré de polymérisation moyen en nombre (Dpn) entre 10.0 et 17.0, essentiellement constituées de polysaccharides ayant des degrés de polymérisation compris entre 1 et 40, plus de 70 % en masse des polysaccharides ayant un degré de polymérisation supérieur à 14.

De préférence, l'invention définit de telles fractions d'inuline ayant un degré de polymérisation moyen en nombre (Dpn) entre 13.0 et 16.0, essentiellement constituées de polysaccharides ayant des degrés de polymérisation compris entre 1 et 40, plus de 75% en masse ayant un degré de polymérisation supérieur à 14.

L'invention a d'autre part aussi pour objet un procédé de fractionnement d'inuline.
Dans une première forme d'exécution,
- l'inuline de départ est une inuline appauvrie en courtes chaînes,
- elle est dispersée dans de l'eau à une température supérieure à la température ambiante,
- après refroidissement, la solution, solution saturée ou dispersion obtenue est fractionnée par une étape de séparation choisie parmi la décantation, la filtration et la centrifugation,
- une première fraction, soluble, et une seconde fraction, insoluble, étant ainsi séparées.

Dans une seconde forme d'exécution, le procédé de fractionnement d'inuline suivant l'invention est caractérisé en ce que
- l'inuline de départ est une inuline appauvrie en courtes chaînes,
- elle est dispersée à une température supérieure à la température ambiante dans une solution d'inuline appauvrie en courtes chaînes,
- après refroidissement, la solution, solution saturée ou dispersion obtenue est fractionnée par une étape de séparation choisie parmi la décantation, la filtration et la centrifugation,
- une première fraction, soluble, et une seconde fraction, insoluble, étant ainsi séparées

Dans une troisième forme d'exécution de l'invention, le procédé de fractionnement d'inuline est caractérisé en ce que
- l'inuline de départ est une inuline appauvrie en courtes chaînes,
- elle est dispersée, à une température supérieure à la température ambiante, dans une solution d'inuline native de chicorée,
- après refroidissement, la solution, solution saturée ou dispersion obtenue est fractionnée par
- une étape de séparation choisie parmi la décantation, la filtration et la centrifugation,
- une première fraction, soluble, et une seconde fraction, insoluble, étant ainsi séparées

Dans une forme préférée de cette troisième variante du procédé selon l'invention, l'inuline de départ est une inuline appauvrie en courtes chaînes, dispersée dans de l'eau à une température comprise entre 65°C et 90°C, à une concentration comprise entre 200 et 400 g/l. Après refroidissement, elle est fractionnée par une étape de séparation choisie parmi la décantation, la filtration et la centrifugation ; une première fraction, soluble, et une seconde fraction, insoluble, sont ainsi séparées.

Le procédé suivant l'invention comporte en outre de préférence une étape de séchage des fractions, par exemple par lyophilisation.

De préférence, la température de l'eau dans laquelle l'inuline de départ est dispersée est de 85°C; de manière préférée, la concentration de l'inuline de départ dans la dispersion est de 300 g/l.

Dans le procédé selon l'invention, l'inuline de départ est de préférence une inuline sous forme de poudre. Selon une particularité préférée de l'invention, on peut ajouter, à une solution d'inuline appauvrie en courtes chaînes, une quantité supplémentaire d'inuline sous forme de poudre, en sorte que la solution d'inuline de départ devienne une solution dite sursaturée, comprenant de l'inuline sous forme insoluble.

Selon une variante du procédé, par l'inuline de départ est une solution d'inuline native de chicorée à laquelle une quantité supplémentaire d'inuline longues châines (appauvrie en courtes chaînes) est ajoutée sous forme de poudre de manière à initier la cristallisation.

Selon un mode de réalisation préféré de l'invention, la solution, la solution sursaturée, ou la dispersion d'inuline est centrifugée pendant une durée et à une force centrifuge suffisante pour obtenir les produits selon l'invention, plus particulièrement pendant au moins 30 minutes à une force centrifuge de 2500 G, ou pendant au moins 5 minutes à une force centrifuge de au moins 20 000 G.
De préférence la centrifugation est réalisée pendant 30 minutes à 20.000 G.

L'étape de séparation peut, le cas échéant, être réalisée après un temps de repos pouvant atteindre 24 heures.

Il a été constaté de manière surprenante que les premières fractions solubles d'inuline, obtenues par ce procédé et ses variantes, conduisent à des compositions en mélange avec d'autres hydrocolloïdes (comme notamment la gellane) présentant un effet synergique particulièrement marqué quant à la formation de gels, en plus d'autres propriétés particulièrement avantageuses, en particulier la transparence et la thermoréversibilité du gel formé.
Il est à remarquer que selon les concentrations utilisées, ni l'inuline seule, ni l'autre hydrocolloïde seul (par exemple la gellane) ne permettent d'obtenir un gel.

L'invention a, en outre, pour objet des compositions contenant de l'inuline et un autre hydrocolloïde, dans lesquelles l'inuline utilisée est, plus particulièrement, une fraction d'inuline selon l'invention, selon l'une ou l'autre des définitions plus haut, ou une fraction d'inuline obtenue comme première fraction dans un procédé selon l'invention, tel que décrit ci-dessus.

Dans ces compositions selon l'invention, l'autre hydrocolloïde est, de préférence, de la gellane.

La gellane est un hétéropolysaccharide linéaire et anionique composée d'unités tétrasaccharides α-D-glucose, α-D-acide glucuronique, α-D-glucose et α-L-rhamnose) et possédant un groupement carboxylique latéral. Elle est d'origine microbienne et est produite par fermentation aérobique de *Sphyngomonas elodea*.

Selon un mode de réalisation particulier de cet aspect de l'invention, l'inuline et l'autre hydrocolloïde sont, de préférence, utilisés dans un rapport de 55 : 1 à 40 : 1, de préférence dans un rapport de 47 : 1.

Une caractéristique importante des gels de l'invention est de fournir une valeur de force de gel élevée même en utilisant de faibles concentrations en hydrocolloïdes.

L'invention a enfin aussi pour objet un gel, à base d'une dispersion aqueuse d'inuline et d'un autre hydrocolloïde ou d'une composition telle que décrite ci-dessus, ayant pour caractéristique principale et fondamentale que ce gel est essentiellement transparent.

Une autre caractéristique importante des gels selon l'invention est leur thermoréversibilité.

Un mode de réalisation particulier de tels gels transparents, selon l'invention, utilise, notamment et de préférence, des fractions d'inuline selon l'invention, selon l'une ou l'autre des définitions plus haut, ou des fractions d'inuline obtenues comme première fraction dans un procédé selon l'invention, tel que décrit ci-dessus.

D'autres particularités et détails des divers aspects de l'invention apparaîtront à la lecture des commentaires techniques suivants.

Le procédé de l'invention permet d'obtenir différentes fractions d'inuline, p.e. selon les conditions de la centrifugation ou des autres étapes de séparation, et d'obtenir des gammes de texture de gel selon les besoins (notamment en association avec d'autres hydrocolloïdes, comme par exemple la gellane).

Selon un procédé de l'invention, l'inuline est obtenue par séparation et séchage du surnageant récupéré par centrifugation d'une solution (sur)saturée ou dispersion, par exemple à environ 30 % .

L'effet de synergie avec les autres hydrocolloïdes, notamment la gellane, apparaît uniquement avec la fraction soluble (première fraction) et pas avec l'inuline de départ, ni avec la fraction insoluble (seconde fraction).

La gélification du mélange inuline-hydrocolloïde (inuline-gellane) est particulière puisque aucun cation monovalent ou divalent n'est ajouté pour la formation du gel.

Les compositions d'inuline et de gellane peuvent être préparées soit à partir de poudres, soit par combinaison de deux solutions aqueuses, soit encore par une méthode mixte.

Les gels sont avantageusement formés en chauffant puis en laissant refroidir. On chauffe plus particulièrement entre 70 et 95°C pendant 1 à 10 minutes, par exemple à 85°C pendant 5 min., la solution contenant le mélange et on laisse refroidir à une température de 2 à 25°C, typiquement à 4°C et 20°C, par exemple pendant 20-30 h, particulièrement environ 24 h.

Les mélanges aqueux sont principalement utilisés avec des quantités allant de 0,15 à 1% pour la gellane et de 7 à 20% pour l'inuline. Des concentrations différentes peuvent cependant être adoptées pour certaines applications particulières.

La synergie selon l'invention, observée entre la "première" fraction d'inuline selon l'invention et la gellane sur la force de gel permet de réduire la quantité de chaque hydrocolloide pour plusieurs applications alimentaires. Ceci permet d'apporter des réductions de coût de formulation mais également d'offrir différentes possibilités dans la différenciation de produits au niveau de leur texture

Le mélange inuline-gellane peut être utilisé dans plusieurs applications et peut notamment substituer la gélatine en confiserie et dans les desserts lactés.
Une particularité intéressante des gels selon l'invention est leur très grande transparence, ce qui augmente leur attractivité pour diverses applications alimentaires.

L'invention définit, finalement, en tant que nouveau produit, une autre (dite "seconde") fraction d'inuline présentant un pic endothermique dont le sommet, tel que mesuré par analyse calorimétrique différentielle, est supérieur à 175°C.

L'invention définit également, en tant que nouveau produit, une fraction d'inuline présentant un degré de polymérisation moyen en masse (Dpw) compris entre 25 et 30, essentiellement constituée de polysaccharides ayant des degrés de polymérisation compris entre 5 et 60, plus de 35 % en masse des polysaccharides ayant une degré de polymérisation supérieur à 30.

L'invention définit, par ailleurs, aussi en tant que nouveau produit, une fraction d'inuline présentant un degré de polymérisation moyen en nombre (Dpn) compris entre 20 et 25, essentiellement constitués de polysaccharides ayant des degrés de polymérisation compris entre 5 et 60, au moins 65 % en masse de polysaccharides ayant un degré de polymérisation compris entre 21 et 40.

Ces fractions sont particulièrement intéressantes pour leur propriétés gélifiantes supérieures et leur faible teneur en glucose lié.

Les exemples suivants illustrent l'invention sans toutefois la limiter.

### Exemple 1

La fraction d'inuline est préparée à partir de "FIBRULINE" LCHT (long chain high temperature) provenant de la société COSUCRA (Belgique). L'inuline est préparée en solution saturée à 30% et le gel résultant est centrifugé pendant 15 minutes à 15000 rpm. Le surnageant est séparé et lyophilisé pour fournir des fractions d'inuline selon la présente invention.
Le tableau I montre les caractéristiques de l'inuline de départ du culot et du surnageant, obtenue par des mesures effectuées par analyse chromatographique Dionex.

Les conditions opératoires sont les suivantes : Dionex DX500; colonne Carbopac PA 100 à 40°C ; pompe GP40 ; débit : 1 ml/min ; l'éluant 1 (NaOH 160 mM) varie de 100% au temps 0 jusque 55.4% au temps 60 minutes et l'éluant 2 (NaOH 160 mM + Na AC 1 M) varie de 0% au temps 0 jusque 44.6% au temps 60 minutes, nettoyage colonne avec NaOH 1 M ; injection de 25 µl d'une solution à 0,800 g/l ; détecteur ED 40 à ampérométrie pulsée thermostatisé à 30°C, les potentiels appliqués à l'électrode de mesure sont successivement de 0,05 V de 0 à 0,4 seconde, de 0,65 V de 0,41 à 0,60 seconde et de -0,1 V de 0,61 à 1,00 seconde et la mesure s'effectue entre 0,20 et 0,40 seconde.

**Tableau I**

| | Inuline de départ | Culot | Surnageant |
|---|---|---|---|
| Sucres libres (%) | 0,4 | 0,2 | 0,9 |
| Glucose + Fructose + Saccharose | | | |
| | | | |
| Dpn ⁽¹⁾ | 21 | 23 | 17 |
| | | | |
| Dpw ⁽²⁾ | 26 | 28 | 22 |
| | | | |
| Dp1 à Dp10 (%) | 3,1 | 2,4 | 5,2 |
| Dp11 à Dp20 (%) | 26,1 | 19,7 | 43,1 |
| Dp21 à Dp30 (%) | 39,6 | 38,3 | 39,8 |
| Dp31 à Dp40 (%) | 25,3 | 31,1 | 16,0 |
| Dp41 à Dp50 (%) | 5,8 | 5,4 | 1,0 |

| | | | |
|---|---|---|---|
| (1) Dpn: Degré de polymérisation par abondance statistique **(ou degré de polymérisation moyen en nombre)** | | | |
| (2) DPw: Degré de polymérisation par 100 g **(ou degré de polymérisation moyen en masse)** | | | |

### Exemple 2

Le mode opératoire est similaire à celui de l'exemple 1. L'inuline de départ est de la "FIBRULINE" LCHT (long chain high temperature) provenant de la société WARCOING INDUSTRIE (Belgique) ou une autre inuline longue chaîne (tell que "RAFTILINE" HP de la Raffinerie Tirlemontoise (Belgique)). L'inuline est préparée en dispersion à 30% à une température de 85°C et le gel résultant est centrifugé pendant 30 minutes à 20 000 G. Les fractions sont séchées par lyophilisation.

### Préparation des échantillons d'inuline à 30% :

Tarer un récipient "berlin" de 1 1 avec une puce magnétique, le placer sur une plaque chauffante ; mettre 500 g d'eau distillée et chauffer à 85°C ;
Saupoudrer 300 g d'inuline dans les 500 g d'eau en agitant ;
Rincer le récipient ayant contenu l'inuline avec 200 g d'eau supplémentaire et les verser dans le mélange ;
Agiter à température ambiante pendant 1 heure ;
Peser et compenser la perte d'eau ;
Verser la préparation dans des pots à centrifugation (contenance 200 ml) ;
Laisser reposer à température ambiante pendant 2 heures ;

Centrifuger à 20 000 G pendant 30 minutes à 20°C dans une centrifugeuse Beckman modèle J2-21 munie d'un rotor JA 14 ; récupérer le surnageant, mesurer son volume et son poids ;
Verser le surnageant dans des ballons à lyophiliser préalablement taré ;
Congeler les ballons au bain à alcool (- 50°C) du lyophilisateur Vel-Virtis 5 SL ;
Lyophiliser pendant 20 à 24 heures ;
Peser les ballons à lyophiliser, calculer le rendement ;
Placer le lyophilisat (inuline centrifugée) en pot fermé hermétique.

Les fractions obtenues présentent des valeurs de sucres libres, Dpn, Dpw et des distributions degré de polymérisation similaires à celles obtenues à l'exemple 1.

**Tableau II:**

| | Inuline de départ | Culot | Surnageant |
|---|---|---|---|
| Sucres libres (%) | 0,3 | 0,1 | 1,1 |
| Glucose + Fructose + Saccharose | | | |
| | | | |
| Dpn ⁽¹⁾ | 21 | 22 | 14 |
| | | | |
| Dpw ⁽²⁾ | 26 | 28 | 19 |
| | | | |
| Dp1 à Dp10 (%) | 4 | 3 | 10 |
| Dp11 à Dp20 (%) | 25 | 21 | 46 |
| Dp21 à Dp30 (%) | 39 | 39 | 35 |
| Dp31 à Dp40 (%) | 23 | 26 | 8 |
| Dp41 à Dp50 (%) | 8 | 10 | 1 |
| Dp51 à Dp60 (%) | 1 | 1 | 0 |

| | | | |
|---|---|---|---|
| (1) Dpn: Degré de polymérisation par abondance statistique **(ou degré de polymérisation moyen en nombre)** | | | |
| (2) Dpw: Degré de polymérisation par 100 g **(ou degré de polymérisation moyen en masse)** | | | |

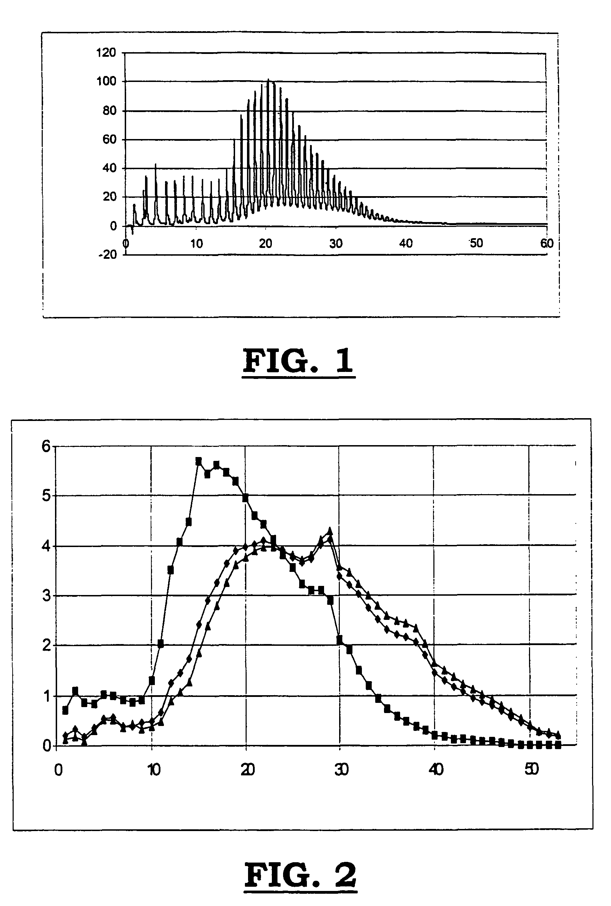

La figure 1 représente un chromatogramme obtenu, à partir du surnageant de l'exemple 2, par analyse chromatographique Dionex suivant la méthode d'analyse décrite à l'exemple 1. L'ordonnée représente le signal ED 40 donné par l'appareil en fonction du temps.

La figure 2 montre la distribution massique du degré de polymérisation (Dp) de l'inuline de départ (représentée par les losanges), de la première fraction soluble correspondant au surnageant (représentée par les carrés) et de la seconde fraction insoluble correspondant au culot (représentée par les triangles).

Cette figure illustre clairement la nature particulière de la fraction d'inuline selon l'invention qui correspond au surnageant, et présente plus de 90 % en masse de polysaccharides à degré de polymérisation compris entre 11 et 40 et plus de 82 % en masse de polysaccharides à degré de polymérisation compris entre 11 et 30.

### Exemple 3

Des mesures en analyse calorimétrique différentielle sont effectuées sur les échantillons obtenus suivant l'exemple 2.
Appareil utilisé : analyseur enthalpique différentiel (DSC 2920 CE - TA Instruments) ;
Groupe de froid : azote liquide ;
Calibrage réalisé avec l'indium et le dodécane - vérification de la ligne de base avec une capsule vide ;
Mode standard d'analyse - capsule aluminium non hermétique, couvercle percé, échantillon +/- 2 mg ;
Profil des températures : 5 min à 10°C, montée à 5°C / min, 5 min à 200°C, retour rapide à température ambiante ;
Relevé du flux de chaleur en fonction de la température. Lecture des températures de fusion par observation des pics et des épaulements sur les diagramme.

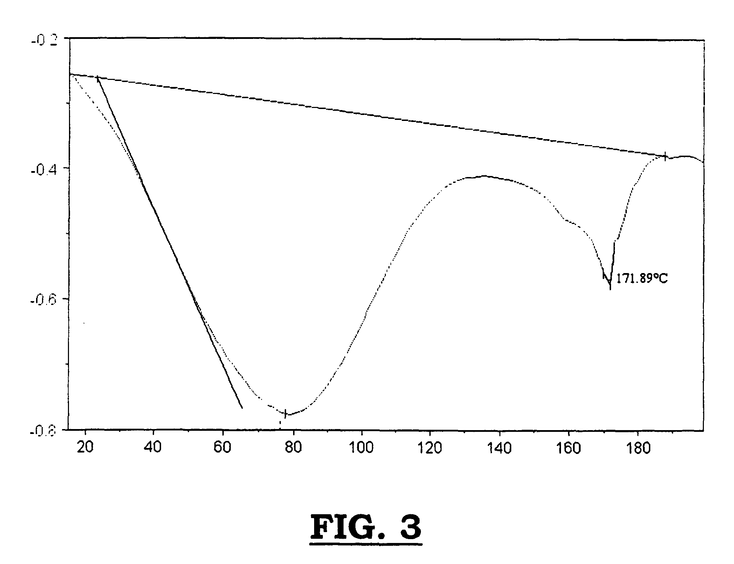

Les figures 3, 4 et 5 montrent les relevés ADC-DSC pour la fraction d'inuline de départ, la première fraction soluble (correspondant au surnageant), et la seconde fraction insoluble (correspondant au culot), respectivement.
On constate ainsi un pic endothermique très manifeste sur le relevé de chacune des fractions.
On voit à la figure 3 (inuline de départ) que le sommet du pic endothermique est situé à 171.89°C. On distingue également sur cette figure un épaulement, qui correspond en fait à la fraction d'inuline correspondant au surnageant. Les températures sont portées en abscisse, tandis que l'ordonnée représente le flux de chaleur endothermique (en Watt/g).

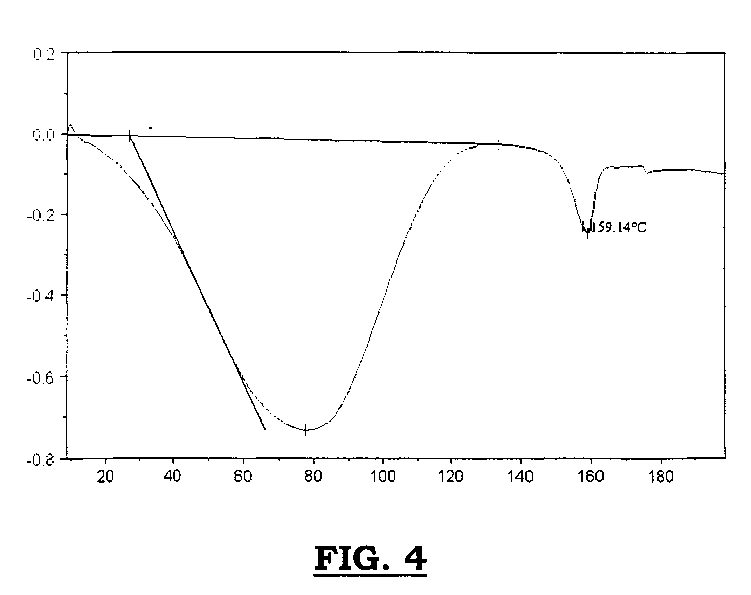

La figure 4 montre, pour la fraction d'inuline correspondant au surnageant, la présence d'un pic endothermique dont le sommet est situé à 159.14°C.

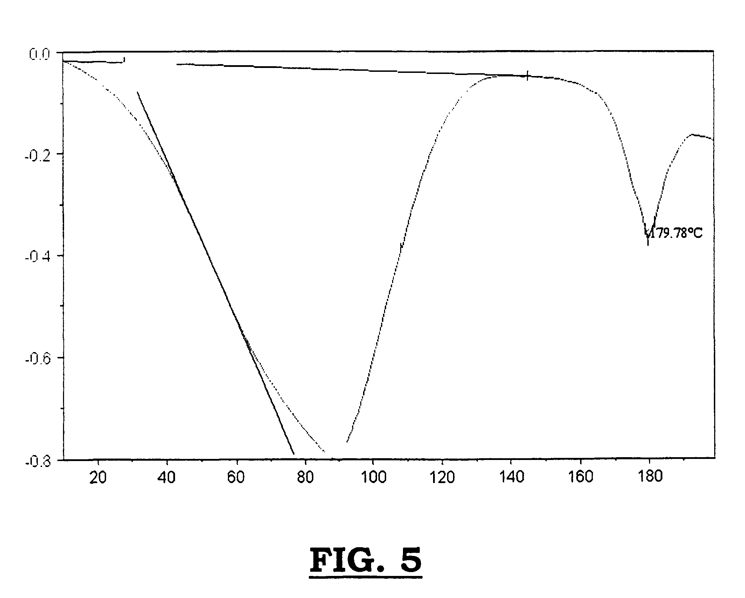

La figure 5 montre la présence d'un pic endothermique dont le sommet est situé à 179.78 °C.

### Exemple 4 : Préparation d'un gel d'inuline et de gellane

On prépare 100 g d'une solution de 7% de la fraction d'inuline préparée selon l'exemple 1 et 0,15 % de gellane à pH 9. La gellane utilisée est le Kelcogel F finement broyée provenant de "The Nutrasweet Kelco". La solution est chauffée à 85°C pendant 5 min, la perte d'eau est compensée et 25 g sont versés dans 3 berlins de 100 ml. On laisse refroidir les berlins jusqu'à 20°C, ou 4°C, pendant 24 heures. La mesure de la texture est réalisée avec un texturomètre SMS (Stable Micro System) TAXT2. Le tableau III montre les paramètres de texture du gel obtenu selon la méthode "texture profil analysis" (TPA) 3 mm. Le mobile utilisé est une sonde plastique, ronde, plate et de 3,5 cm de diamètre, la vitesse de pénétration est de 2 mm/s, la profondeur de pénétration est 3 mm, le temps entre 2 compressions est de 5 s et le seuil de détection est de 0,05 N.

**Tableau III :**

| Paramètres de texture du gel formé par le mélange gellane / inuline (à pH 9) | | |
|---|---|---|
| Paramètres de Texture | Température de refroidissement | |
| | 20°C | 4°C |
| Elasticité | 0,87 ± 0,01 | 0,83 ± 0,05 |
| Cohésivité | 0,35 ± 0,01 | 0,39 ± 0,03 |
| "Chewiness" | 1,14 ± 0,23 | 0,92 ± 0,02 |
| "Gumminess" | 1,30 ± 0,24 | 1,11 ± 0,06 |
| Fermeté (N) | 3,69 ± 0,57 | 2,88 ± 0,20 |
| Adhésivité | -0,15 ± 0,07 | -0,15 ± 0,02 |

### Exemple 5

Comme dans l'exemple 4, le gel est préparé à partir du mélange gellane 0,15 et inuline 7% mais le pH de la solution est ajustée à 4 avec de l'acide citrique. Le tableau IV montre les résultats obtenus. A pH 4 le gel est plus ferme, plus adhésif qu'à pH 9 mais perd légèrement son élasticité aussi bien lorsque la solution est refroidie à 20°C, qu'à 4°C.

**Tableau IV :**

| Paramètres de texture du gel formé par le mélange gellane / inuline à pH 4 | | |
|---|---|---|
| Texture | Température de refroidissement | |
| | 20°C | 4°C |
| Elasticité | 0,74 ± 0,13 | 0,81 ± 0,02 |
| Cohésivité | 0,48 ± 0,10 | 0,40 ± 0,00 |
| Chewiness | 1,72 ± 0,04 | 1,47 ± 0,02 |
| Gumminess | 2,40 ± 0,05 | 1,83 ± 0,08 |
| Fermeté (N) | 5,01 ± 0,01 | 4,59 ± 0,18 |
| Adhésivité | -0,29 ± 0,06 | -0,28 ± 0,02 |

### Exemple 6

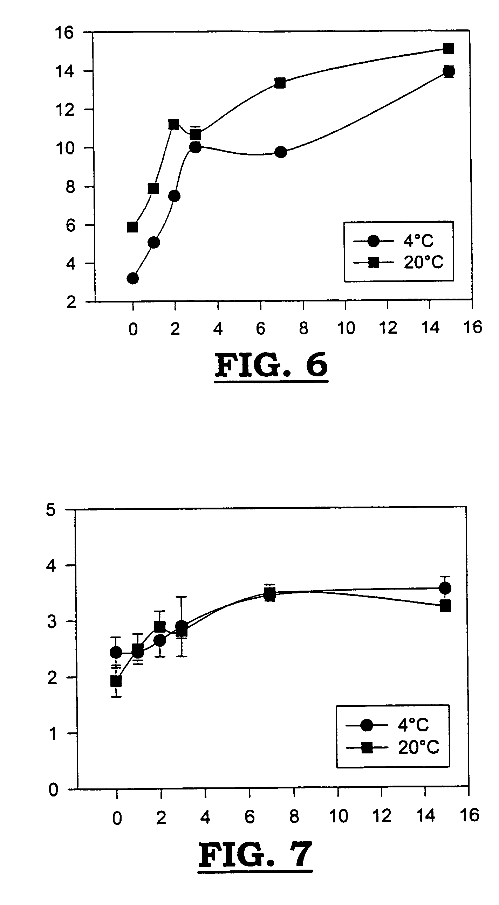

La stabilité du gel préparé selon l'exemple 5 est mesurée après 1, 2, 3, 7 et 15 jours. La stabilité est déterminée par la synérèse qui représente le pourcentage d'eau exclu de la structure gélifiée en fonction du temps, en jours. La figure 6 représente l'évolution de la synérèse du gel formée par le mélange inuline/gellane préparé à partir de poudres, après 24 heures de gélification. L'abscisse représente le temps en jour, l'ordonnée la synérèse, en %. La synérèse du gel augmente pendant les 3 premiers jours et a tendance à se stabiliser.

### Exemple 7

Comme dans l'exemple 6, la fermeté du gel est déterminée en fonction du temps à partir du profil de texture (TPA) mesuré à l'aide d'un texturomètre SMS TAXT2. Les résultats sont présentés à la figure 7. Cette figure représente l'évolution de la fermeté ou farce de gel du gel formé par le mélange inuline/gellane préparé à partir de poudres, après 24 heures de gélification. L'abscisse représente le temps en jours, l'ordonnée l'évolution de la fermeté ou force de gel (en %). La fermeté du gel augmente en fonction du temps, plus particulièrement pendant une semaine, puis a tendance à se stabiliser.

### Exemple 8

Des gels sont préparés dans les mêmes conditions que dans l'exemple 4 en maintenant le rapport mentionné mais en augmentant la concentration totale du mélange. La stabilité et le profil de texture des gels sont présentés dans le tableau V. En augmentant la concentration totale d'un facteur 1,5, l'élasticité du gel augmente légèrement tandis que sa fermeté a plus que doublé. En doublant la concentration, la fermeté n'augmente pas. Au contraire, elle diminue légèrement. la stabilité du gel vis à vis de la synérèse augmente avec l'augmentation de la concentration.

**Tableau V:**

| Effet de la concentration sur la synérèse et le profil de texture du mélange inuline/gellane | | | | | | | |
|---|---|---|---|---|---|---|---|
| Proportions Inuline (%) / Gellane (%) | Synérèse (%) | Elasticité | Cohésivité | Chewiness | Gumminess | Fermeté (N) | Adhésivité |
| 7/0,15 | 3,6 ± 0,3 | 0,89 ± 0,02 | 0.34 ± 0,01 | 1,12 ± 0,07 | 1,26 ± 0,06 | 3,65 ± 0,13 | -0.09 ± 0,02 |
| 10,5/0,22 | 1,6 ± 0,0 | 0,91 ± 0,04 | 0.34 ± 0,02 | 2.46 ± 0,26 | 2.71 ± 0.32 | 8.03 ± 0,50 | -0.64 ± 0.07 |
| 14/0.3 | 1.1 ± 0,1 | 0.90 ± 0,03 | 0,36 ± 0,05 | 2,36 ± 0,05 | 2.64 ± 0.28 | 7,38 ± 0.25 | -0.51 ±0.13 |

### Exemple 9

Des gels sont préparés sans gellane, à partir de la seconde fraction insoluble (culot après centrifugation). 80 g d'inuline sont ajoutés à 320 ml d'eau à 80°C. Cette préparation est mélangée pendant 5 minutes puis versée dans des récipients de 30 ml. Les récipients sont stockés à 4°C pendant 24 heures.

La mesure de texture est réalisée avec un texturomètre MECMESSIN M 1000 EC muni d'une sonde cylindrique d'1 cm de diamètre; la vitesse de pénétration est de 0,5 mm/s.

Les valeurs de la force de gel obtenues sont de 2,7 ± 0,2 N, alors que les valeurs de la force de gel d'échantillons d'inuline de départ traités dans les mêmes conditions sont de 1,5 ± 0,2 N.

## Revendications

1. Fraction d'inuline présentant un pic endothermique dont le sommet, tel que mesuré par analyse calorimétrique différentielle, est situé entre 150 et 165°C.

2. Fraction d'inuline suivant la revendication 1, **caractérisée en ce qu'**elle présente un pic endothermique dont le sommet, tel que mesuré par analyse calorimétrique différentielle, est situé entre 158 et 163°C.

3. Fraction d'inuline **caractérisée en ce qu'**elle a un degré de polymérisation moyen en masse(Dpw) entre 15.0 et 22.0, essentiellement constituée de polysaccharides ayant des degrés de polymérisation compris entre 1 et 40, et **en ce que** plus de 85% en masse des polysaccharides ont un degré de polymérisation compris entre 11 et 40.

4. Fraction d'inuline suivant la revendication 3, **caractérisée en ce que** plus de 75 % en masse des polysaccharides ont un degré de polymérisation compris entre 11 et 30.

5. Fraction d'inuline suivant l'une quelconque des revendications 3 et 4, **caractérisée en ce qu'**elle a un degré de polymérisation moyen en masse(Dpw) entre 18.0 et 21.0, essentiellement constituée de polysaccharides ayant des degrés de polymérisation compris entre 1 et 40, et **en ce que** plus de 90 % en masse des polysaccharides ont un degré de polymérisation compris entre 11 et 40.

6. Fraction d'inuline suivant l'une quelconque des revendications 3 à 5, **caractérisée en ce que** plus de 80 % en masse des polysaccharides ont un degré de polymérisation compris entre 11 et 30.

7. Fraction d'inuline suivant l'une quelconque des revendications 3 à 6, **caractérisé en ce que** plus de 75 % en masse des polysaccharides ont un degré de polymérisation inférieur à 26..

8. Fraction d'inuline **caractérisée en ce qu'**elle a un degré de polymérisation moyen en nombre (Dpn) entre 10.0 et 17.0, essentiellement constituée de polysaccharides ayant des degrés de polymérisation compris entre 1 et 40, plus de 70 % en masse des polysaccharides ont un degré de polymérisation supérieur à 14.

9. Fraction d'inuline selon la revendication 8, **caractérisée en ce qu'**elle a un degré de polymérisation moyen en nombre (Dpn) entre 13.0 et 16.0, essentiellement constituée de polysaccharides ayant des degrés de polymérisation compris entre 1 et 40 et **en ce que** plus de 75 % en masse de polysaccharides ont un degré de polymérisation supérieur à 14.

10. Procédé de fractionnement d'inuline, **caractérisé** e ce que
- l'inuline de départ est une inuline appauvrie en courtes chaînes,
- elle est dispersée dans de l'eau à une température supérieure à la température ambiante,
- après refroidissement la solution, solution saturée ou dispersion obtenue est fractionnée par une étape de séparation choisie parmi la décantation, la filtration et la centrifugation,
- une première fraction, soluble, et une seconde fraction, insoluble, étant ainsi séparées.

11. Procédé de fractionnement d'inuline, **caractérisé ce que**
- l'inuline de départ est une inuline appauvrie en courtes chaînes,
- elle est dispersée à une température supérieure à la température ambiante dans une solution d'inuline appauvrie en courtes chaînes,
- après refroidissement, la solution, solution saturée ou dispersion obtenue est fractionnée par une étape de séparation choisie parmi la décantation, la filtration et la centrifugation,
- une première fraction, soluble, et une seconde fraction, insoluble, étant ainsi séparées

12. Procédé de fractionnement d'inuline, **caractérisé** e ce que
- l'inuline de départ est une inuline appauvrie en courtes chaînes,
- elle est dispersée, à une température supérieure à la température ambiante, dans une solution d'inuline native de chicorée,
- après refroidissement, la solution, solution saturée ou dispersion obtenue est fractionnée par une étape de séparation choisie parmi la décantation, la filtration et la centrifugation,
- une première fraction, soluble, et une seconde fraction, insoluble, étant ainsi séparées

13. Procédé suivant l'une quelconque des revendications 10 à 12 , **caractérisé en ce que** l'inuline de départ est dispersée à une température comprise entre 65°C et 90°C.

14. Procédé suivant l'une quelconque des revendications 10 et 13, **caractérisé en ce que** la dispersion a une concentration comprise entre 200 et 400 g/l.

15. Procédé suivant l'une quelconque des revendication 10 à 14, **caractérisé en ce que** la température de l'eau dans laquelle l'inuline de départ est dispersée est de 85°C.

16. Procédé suivant l'une quelconque des revendications 13 à 15, **caractérisé en ce que** la concentration de l'inuline dans la solution, solution saturée ou dispersion est de 300 g/l.

17. Procédé suivant l'une quelconque des revendications 10 et 16, **caractérisé en ce qu'**il comporte en outre une étape de séchage des fractions.

18. Procédé suivant l'une quelconque des revendications 10 à 17, **caractérisé en ce que** l'inuline de départ est de l'inuline sous forme de poudre.

19. Procédé suivant l'une quelconque des revendications 10 à 18, **caractérisé en ce que** l'inuline de départ présente un degré de polymérisation moyen en masse (Dpw) et un degré de polymérisation moyen en nombre (Dpn) supérieurs à ceux de l'inuline native de chicorée.

20. Procédé suivant l'une quelconque des revendications 10 à 19, **caractérisé en ce que** la solution, solution saturée ou dispersion d'inuline est centrifugée pendant au moins 5 minutes, à une force centrifuge d'au moins 20 000 G.

21. Procédé suivant l'une quelconque des revendications 10 à 19, **caractérisé en ce que** la solution, solution saturée ou dispersion d'inuline est centrifugée pendant au moins 30 minutes, à une force centrifuge d'au moins 2500 G.

22. Procédé suivant l'une quelconque des revendications 10 à 19, **caractérisé en ce que** la solution, solution saturée ou dispersion d'inuline est centrifugée pendant au moins 5 minutes, à une force centrifuge d'au moins 20.000 G.

23. Composition contenant de l'inuline et un autre hydrocolloïde, **caractérisée en ce que** l'inuline utilisée est une fraction d'inuline suivant l'une quelconque des revendications 1 à 9, ou une première fraction d'inuline obtenue par un procédé suivant l'une quelconque des revendications 10 à 22.

24. Composition suivant la revendication 23, **caractérisée en ce que** l'autre hydrocolloïde est de la gellane.

25. Composition suivant la revendication 24, **caractérisée en ce que** les mélanges aqueux sont utilisés avec des quantités d'inuline allant de 7 à 20 % et des quantités de gellane allant de 0,15 à 1%.

26. Composition suivant l'une quelconque des revendications 23 à 25, **caractérisée en ce que** l'inuline et l'autre hydrocolloïde sont utilisés dans un rapport 55:1 à 40: 1.

27. Composition suivant la revendication 26, **caractérisée en ce que** l'inuline et l'autre hydrocolloïde sont utilisés dans un rapport de 47 : 1.

28. Composition suivant l'une quelconque des revendications 23 à 27, **caractérisée en ce qu'**elle est utilisée comme remplaçant de gélatine.

29. Gel, à base d'une dispersion aqueuse de fractions d'inuline suivant l'une quelconque des revendications 1 à 9 et d'un autre hydrocolloïde, **caractérisé en ce que** ce gel est essentiellement transparent.

30. Gel suivant la revendication 29, **caractérisé en ce qu'**il est thermoréversible.

31. Gel suivant l'une quelconque des revendications 29 à 30, **caractérisé en ce que** la dispersion est obtenue à partir d'une composition selon l'une ou l'autre des revendications 23 à 28.

32. Fraction d'inuline présentant un pic endothermique dont le sommet, tel que mesuré par analyse calorimétrique différentielle, est supérieur à 175°C.

33. Fraction d'inuline, **caractérisée en ce qu'**elle présente un degré de polymérisation moyen en masse (Dpw) compris entre 25 et 30, essentiellement constituée de polysaccharides ayant des degrés de polymérisation compris entre 5 et 60, et **en ce que** plus de 35 % en masse de polysaccharides ont un degré de polymérisation supérieur à 30.

34. Fraction d'inuline **caractérisée en ce qu'**elle présente un degré de polymérisation moyen en nombre (Dpn) compris entre 20 et 25, essentiellement constituées de polysaccharides ayant des degrés de polymérisation compris entre 5 et 60, et **en ce qu'**au moins 65 % en masse des polysaccharides ont un degré de polymérisation compris entre 21 et 40.

35. Gel à base d'une dispersion d'une fraction d'inuline selon l'une ou l'autre des revendications 32 à 34, **caractérisé en ce qu'**il possède une force de gel sensiblement supérieure à celle d'un gel obtenu à partir d'une inuline de départ non fractionnée.

## Patentansprüche

1. Inulinfraktion mit endothermischem Peak, dessen Gipfel gemäß differentialkalorimetrischer Analyse zwischen 150 und 165°C liegt.

2. Inulinfraktion gemäß Anspruch 1, **dadurch gekennzeichnet, daß** sie einen endothermischen Peak aufweist, dessen Gipfel gemäß differentialkalorimetrischer Analyse zwischen 158 und 163°C liegt.

3. Inulinfraktion **dadurch gekennzeichnet, daß** sie einen gewichtsmittleren Polymerisationsgrad (DPw) zwischen 15,0 und 22,0 aufweist und im wesentlichen aus Polysacchariden mit einem Polymerisationsgrad zwischen 1 und 40 besteht, und **dadurch**, daß 85 Gew.-% der Polysaccharide einen Polymerisationsgrad zwischen 11 und 40 aufweisen.

4. Inulinfraktion nach Anspruch 3, **dadurch gekennzeichnet, daß** mehr als 75 Gew.-% der Polysaccharide einen Polymerisationsgrad zwischen 11 und 30 aufweisen.

5. Inulinfraktion nach einem der Ansprüche 3 und 4, **dadurch gekennzeichnet, daß** sie einen gewichtsmittleren Polymerisationsgrad (DPw) zwischen 18,0 und 21,0 aufweist und im wesentlichen aus Polysacchariden mit einem Polymerisationsgrad zwischen 1 und 40 besteht, und **dadurch**, daß 90 Gew.-% der Polysaccharide einen Polymerisationsgrad zwischen 11 und 40 aufweisen.

6. Inulinfraktion nach einem der Ansprüche 3 bis 5, **dadurch gekennzeichnet, daß** mehr als 80 Gew.-% der Polysaccharide einen Polymerisationsgrad zwischen 11 und 30 aufweisen.

7. Inulinfraktion nach einem der Ansprüche 3 bis 6, **dadurch gekennzeichnet, daß** mehr als 75 Gew.-% der Polysaccharide einen Polymerisationsgrad unter 26 aufweisen.

8. Inulinfraktion, **dadurch gekennzeichnet, daß** sie einen zahlenmittleren Polymerisationsgrad (DPn) zwischen 10,0 und 17,0 aufweist und im wesentlichen aus Polysacchariden mit Polymerisationsgraden zwischen 1 und 40 besteht und mehr als 70 Gew.-% der Polysaccharide einen Polymerisationsgrad über 14 aufweisen.

9. Inulinfraktion nach Anspruch 8, **dadurch gekennzeichnet, daß** sie einen zahlenmittleren Polymerisationsgrad (DPn) zwischen 13,0 und 16,0 aufweist und im wesentlichen aus Polysacchariden mit Polymerisationsgraden zwischen 1 und 40 besteht und **dadurch**, daß 75 Gew.-% der Polysaccharide einen Polymerisationsgrad über 14 aufweisen.

10. Verfahren zur Fraktionierung von Inulin, **dadurch gekennzeichnet, daß**
- es sich bei dem Ausgangsinulin um ein Inulin, das an kurzen Ketten abgereichert ist, handelt,
- es in Wasser bei einer Temperatur oberhalb der Raumtemperatur dispergiert ist,
- nach dem Abkühlen die erhaltene Lösung, gesättigte Lösung oder Dispersion durch einen Trennschritt aus der Reihe Dekantieren, Filtration und Zentrifugierung fraktioniert wird,
- wodurch eine erste lösliche und eine zweite unlösliche Fraktion getrennt werden.

11. Verfahren zur Fraktionierung von Inulin, **dadurch gekennzeichnet, daß**
- es sich bei dem Ausgangsinulin um ein Inulin, das an kurzen Ketten abgereichert ist, handelt,
- es in einer Inulinlösung, die an kurzen Ketten abgereichert ist, bei einer Temperatur oberhalb der Raumtemperatur dispergiert ist,
- nach dem Abkühlen die erhaltene Lösung, gesättigte Lösung oder Dispersion durch einen Trennschritt aus der Reihe Dekantieren, Filtration und Zentrifugierung fraktioniert wird,
- wodurch eine erste lösliche und eine zweite unlösliche Fraktion getrennt werden.

12. Verfahren zur Fraktionierung von Inulin, **dadurch gekennzeichnet, daß**
- es sich bei dem Ausgangsinulin um ein Inulin, das an kurzen Ketten abgereichert ist, handelt,
- in einer Lösung von nativem Inulin aus Zichorie bei einer Temperatur oberhalb der Raumtemperatur dispergiert ist,
- nach dem Abkühlen die erhaltene Lösung, gesättigte Lösung oder Dispersion durch einen Trennschritt aus der Reihe Dekantieren, Filtration und Zentrifugierung fraktioniert wird,
- wodurch eine erste lösliche und eine zweite unlösliche Fraktion getrennt werden.

13. Verfahren nach einem der Ansprüche 10 bis 12, **dadurch gekennzeichnet, daß** das Ausgangsinulin bei einer Temperatur zwischen 65°C und 90°C dispergiert wird.

14. Verfahren nach einem der Ansprüche 10 und 13, **dadurch gekennzeichnet, daß** die Dispersion eine Konzentration zwischen 200 und 400 g/l aufweist.

15. Verfahren nach einem der Ansprüche 10 bis 14, **dadurch gekennzeichnet, daß** die Temperatur des Wassers, in dem das Ausgangsinulin dispergiert wird, 85°C beträgt.

16. Verfahren nach einem der Ansprüche 13 bis 15, **dadurch gekennzeichnet, daß** die Inulinkonzentration in der Lösung, gesättigten Lösung oder Dispersion 300 g/l beträgt.

17. Verfahren nach einem der Ansprüche 10 bis 16
**dadurch gekennzeichnet, daß** es weiterhin einen Schritt, in dem die Fraktionen getrocknet werden, umfaßt.

18. Verfahren nach einem der Ansprüche 10 bis 17, **dadurch gekennzeichnet, daß** es sich bei dem Ausgangsinulin um pulverförmiges Inulin handelt.

19. Verfahren nach einem der Ansprüche 10 bis 18, **dadurch gekennzeichnet, daß** das Ausgangsinulin einen gewichtsmittleren Polymerisationsgrad (DPw) und einen zahlenmittleren Polymerisationsgrad (DPn) über denjenigen des nativen Chicorée-Inulins aufweist.

20. Verfahren nach einem der Ansprüche 10 bis 19, **dadurch gekennzeichnet, daß** die Inulinlösung, gesättigte Inulinlösung oder Inulindispersion mindestens 5 Minuten lang mit einer Zentrifugalkraft von mindestens 20.000 G zentrifugiert wird.

21. Verfahren nach einem der Ansprüche 10 bis 19, **dadurch gekennzeichnet, daß** die Inulinlösung, gesättigte Inulinlösung oder Inulindispersion mindestens 30 Minuten lang mit einer Zentrifugalkraft von mindestens 2.500 G zentrifugiert wird.

22. Verfahren nach einem der Ansprüche 10 bis 19, **dadurch gekennzeichnet, daß** die Inulinlösung, gesättigte Inulinlösung oder Inulindispersion mindestens 5 Minuten lang mit einer Zentrifugalkraft von mindestens 20.000 G zentrifugiert wird.

23. Zusammensetzung, die Inulin und ein anderes Hydrokolloid enthält, **dadurch gekennzeichnet, daß** es sich bei dem verwendeten Inulin um eine Inulinfraktion nach einem der Ansprüche 1 bis 9 oder um eine erste Inulinfraktion, die mit einem Verfahren nach einem der Ansprüche 10 bis 22 erhalten wird, handelt.

24. Zusammensetzung nach Anspruch 23, **dadurch gekennzeichnet, daß** es sich bei dem anderen Hydrokolloid um Gelan handelt.

25. Zusammensetzung nach Anspruch 24, **dadurch gekennzeichnet, daß** die wäßrigen Mischungen mit Inulinmengen von 7 bis 20% und Gelanmengen von 0,15 bis 1% verwendet werden.

26. Zusammensetzung nach einem der Ansprüche 23 bis 25, **dadurch gekennzeichnet, daß** das Inulin und das andere Hydrokolloid im Verhältnis 55:1 1 bis 40:1 verwendet werden.

27. Zusammensetzung nach Anspruch 26, **dadurch gekennzeichnet, daß** das Inulin und das andere Hydrokolloid im Verhältnis 47:1 verwendet werden.

28. Zusammensetzung nach einem der Ansprüche 23 bis 27, **dadurch gekennzeichnet, daß** sie als Gelatineersatz verwendet wird.

29. Gel auf Basis einer wäßrigen Dispersion von Inulinfraktionen nach einem der Ansprüche 1 bis 9 und einem anderen Hydrokolloid, **dadurch gekennzeichnet, daß** dieses Gel im wesentlichen durchsichtig ist.

30. Gel nach Anspruch 29, **dadurch gekennzeichnet, daß** es hitzereversibel ist.

31. Gel nach Anspruch 29 oder 30, **dadurch gekennzeichnet, daß** die Dispersion ausgehend von einer Zusammensetzung nach einem oder anderen der Ansprüche 23 bis 28 erhalten wird.

32. Inulinfraktion mit einem endothermischen Peak dessen Gipfel gemäß differentialkalorimetrischer Analyse oberhalb 175°C liegt.

33. Inulinfraktion, **dadurch gekennzeichnet, daß** sie einen gewichtsmittleren Polymerisationsgrad (DPw) zwischen 25 und 30 aufweist um im wesentlichen aus Polysacchariden mit einem Polymerisationsgrad zwischen 5 und 60 besteht, und **dadurch**, daß mehr als 35 Gew.-% der Polysaccharide einen Polymerisationsgrad oberhalb 30 aufweisen.

34. Inulinfraktion, **dadurch gekennzeichnet, daß** sie einen zahlenmittleren Polymerisationsgrad (DPn) zwischen 20 und 25 aufweist und im wesentlichen aus Polysacchariden mit einem Polymerisationsgrad zwischen 5 und 60 besteht, und **dadurch**, daß mindestens 65 Gew.-% der Polysaccharide einen Polymerisationsgrad zwischen 21 und 40 aufweisen.

35. Gel auf Basis einer Dispersion einer Inulinfraktion nach einen oder anderen der Ansprüche 32 bis 34, **dadurch gekennzeichnet, daß** es eine Gelfestigkeit aufweist, die wesentlich oberhalb der Gelfestigkeit eines Gels, das mit einem nichtfraktionierten Ausgangsinulin erhalten wird, liegt.

## Claims

1. Inulin fraction having an endothermic peak whose highest point as measured by differential scanning calorimetry is between 150 and 165°C.

2. Inulin fraction according to Claim 1, **characterized in that** it has an endothermic peak whose highest point as measured by differential scanning calorimetry is between 158 and 163°C.

3. Inulin fraction, **characterized in that** it has a weight-average degree of polymerization (DPw) of between 15.0 and 22.0, is essentially composed of polysaccharides with degrees of polymerization of between 1 and 40, and **in that** more than 85% by weight of the polysaccharides have a degree of polymerization of between 11 and 40.

4. Inulin fraction according to Claim 3, **characterized in that** more than 75% by weight of the polysaccharides have a degree of polymerization of between 11 and 30.

5. Inulin fraction according to either of Claims 3 or 4, **characterized in that** it has a weight-average degree of polymerization (DPw) of between 18.0 and 21.0, is essentially composed of polysaccharides with degrees of polymerization of between 1 and 40, and **in that** more than 90% by weight of the polysaccharides have a degree of polymerization of between 11 and 40.

6. Inulin fraction according to any one of Claims 3 to 5, **characterized in that** more than 80% by weight of the polysaccharides have a degree of polymerization of between 11 and 30.

7. Inulin fraction according to any one of Claims 3 to 6, **characterized in that** more than 75% by weight of the polysaccharides have a degree of polymerization of less than 26.

8. Inulin fraction, **characterized in that** it has a number-average degree of polymerization (DPn) of between 10.0 and 17.0, is essentially composed of polysaccharides with degrees of polymerization of between 1 and 40, and more than 70% by weight of the polysaccharides have a degree of polymerization of more than 14.

9. Inulin fraction according to Claim 8, **characterized in that** it has a number-average degree of polymerization (DPn) of between 13.0 and 16.0, is essentially composed of polysaccharides with degrees of polymerization of between 1 and 40, and **in that** more than 75% by weight of the polysaccharides have a degree of polymerization of more than 14.

10. Process for fractionating inulin, **characterized in that**
- the starting inulin is an inulin which is depleted of short chains,
- it is dispersed in water at a temperature greater than ambient temperature,
- after chilling the solution, the saturated solution or dispersion obtained is fractionated by a separation step selected from among decanting, filtration and centrifugation,
- a first, soluble, fraction and a second, insoluble, fraction thus being separated.

11. Process for fractionating inulin, **characterized in that**
- the starting inulin is an inulin which is depleted of short chains,
- it is dispersed in an inulin solution which is depleted of short chains, at a temperature greater than ambient temperature,
- after chilling, the solution, the saturated solution or dispersion obtained is fractionated by a separation step selected from among decanting, filtration and centrifugation,
- a first, soluble, fraction and a second, insoluble, fraction thus being separated.

12. Process for fractionating inulin, **characterized in that**
- the starting inulin is an inulin which is depleted of short chains,
- it is dispersed in a solution of native inulin from chicory at a temperature greater than ambient temperature,
- after chilling, the solution, the saturated solution or dispersion obtained is fractionated by a separation step selected from among decanting, filtration and centrifugation,
- a first, soluble, fraction and a second, insoluble, fraction thus being separated.

13. Process according to any one of Claims 10 to 12, **characterized in that** the starting inulin is dispersed at a temperature of between 65°C and 90°C.

14. Process according to any one of Claims 10 to 13, **characterized in that** the dispersion has a concentration of between 200 and 400 g/l.

15. Process according to any one of Claims 10 to 14, **characterized in that** the temperature of the water in which the starting inulin is dispersed is 85°C.

16. Process according to any one of Claims 13 to 15, **characterized in that** the inulin concentration in the solution, saturated solution or dispersion is 300 g/l.

17. Process according to any one of Claims 10 to 16, **characterized in that** it additionally comprises a step in which the fractions are dried.

18. Process according to any one of Claims 10 to 17, **characterized in that** the starting inulin is inulin in pulverulent form.

19. Process according to any one of Claims 10 to 18, **characterized in that** the starting inulin has a weight-average degree of polymerization (DPw) and a number-average degree of polymerization (DPn) above those of native inulin from chicory.

20. Process according to any one of Claims 10 to 19, **characterized in that** the inulin solution, saturated inulin solution or inulin dispersion is centrifuged for at least 5 minutes at a centrifugal force of at least 20 000 G.

21. Process according to any one of Claims 10 to 19, **characterized in that** the inulin solution, saturated inulin solution or inulin dispersion is centrifuged for at least 30 minutes at a centrifugal force of at least 2500 G.

22. Process according to any one of Claims 10 to 19, **characterized in that** the inulin solution, saturated inulin solution or inulin dispersion is centrifuged for at least 5 minutes of a centrifugal force of at least 20 000 at G.

23. Composition comprising inulin and another hydrocolloid, **characterized in that** the inulin used is an inulin fraction according to any one of Claims 1 to 9, or a first inulin fraction obtained by a process according to any one of Claims 10 to 22.

24. Composition according to Claim 23, **characterized in that** the other hydrocolloid is gellan.

25. Composition according to Claim 24, **characterized in that** the aqueous mixtures are used with inulin quantities of from 7 to 20% and gellan quantities of from 0.15 to 1%.

26. Composition according to any one of Claims 23 to 25, **characterized in that** the inulin and the other hydrocolloid are used in a ratio of from 55:1 to 40:1.

27. Composition according to Claim 26, **characterized in that** the inulin and the other hydrocolloid are used in a ratio of 47:1.

28. Composition according to any one of Claims 23 to 27, **characterized in that** it is used as replacement for gelatine.

29. Gel based on an aqueous dispersion of inulin fractions according to any one of Claims 1 to 9 and another hydrocolloid, **characterized in that** this gel is essentially transparent.

30. Gel according to Claim 29, **characterized in that** it is thermoreversible.

31. Gel according to either of Claims 29 or 30,
**characterized in that** the dispersion is obtained starting from a composition according to one or other of Claims 23 to 28.

32. Inulin fraction having an endothermic peak whose highest point as measured by differential scanning calorimetry is above 175°C.

33. Inulin fraction, **characterized in that** it has a weight-average degree of polymerization (DPw) of between 25 and 30, essentially composed of polysaccharides having degrees of polymerization of between 5 and 60, and **in that** more than 35% by weight of the polysaccharides have a degree of polymerization of above 30.

34. Inulin fraction, **characterized in that** it has a number-average degree of polymerization (DPn) of between 20 and 25, essentially composed of polysaccharides having degrees of polymerization of between 5 and 60, and **in that** at least 65% by weight of the polysaccharides have a degree of polymerization of between 21 and 40.

35. Gel based on a dispersion of an inulin fraction according to one or other of Claims 32 to 34, **characterized in that** it has a gel strength which is substantially above the gel strength of a gel obtained starting from a non fractionated starting inulin.
